(19) **Europäisches Patentamt**

**European Patent Office**

**Office européen des brevets**

(11) **EP 1 004 545 B1**

(12) **EUROPÄISCHE PATENTSCHRIFT**

(45) Veröffentlichungstag und Bekanntmachung des Hinweises auf die Patenterteilung:
**09.01.2002 Patentblatt 2002/02**

(51) Int Cl.[7]: **C01B 33/18**, C01B 13/24, C08L 83/04, C08K 3/22, C09K 3/14, C03C 1/00, B01J 19/24

(21) Anmeldenummer: **99122521.0**

(22) Anmeldetag: **12.11.1999**

(54) **Verfahren zur Synthese von Feststoffen**

Process for the synthesis of solids

Procédé pour la synthèse de matières solides

(84) Benannte Vertragsstaaten:
**BE DE GB**

(30) Priorität: **26.11.1998 DE 19854597**

(43) Veröffentlichungstag der Anmeldung:
**31.05.2000 Patentblatt 2000/22**

(73) Patentinhaber: **Degussa AG**
**40474 Düsseldorf (DE)**

(72) Erfinder:
• **Schild, Andreas**
**63584 Gründau (DE)**

• **Gutsch, Andreas**
**63695 Ranstadt (DE)**
• **Barthold, Axel**
**63584 Gründau (DE)**
• **Rochnia, Matthias, Dr.**
**79618 Rheinfelden (DE)**
• **Mang, Günther**
**79739 Schwörstadt (DE)**

(56) Entgegenhaltungen:
**FR-A- 1 439 676      FR-A- 2 339 569**
**US-A- 3 006 738      US-A- 3 306 760**
**US-A- 3 363 980**

EP 1 004 545 B1

**Beschreibung**

Die Erfindung betrifft ein Verfahren und eine Vorrichtung zur Synthese von Feststoffen.

Bei der bekannten Synthese von Feststoffen, wie zum Beispiel die Synthese pyrogener Oxide, werden die Edukte in einem Flammprozeß bei Temperaturen oberhalb von ca. 1200 K umgesetzt (Ullmanns Enzyklopädie der technischen Chemie, 4. Auflage, Band 21, Seiten 464 ff. (1982)). Bei Abkühlung der Prozeßgase kondensieren beziehungsweise desublimieren die zunächst gasförmigen Produkte. Primär entstehen dabei Cluster von extremer Feinheit. Das weitere Clusterwachstum wird durch Agglomerationsvorgänge der Cluster untereinander dominiert. Nach entsprechender Reduktion der Anzahlkonzentration der Cluster, die sich als Folge der stetigen Agglomeration einstellt, ist das primäre Partikelwachstum abgeschlossen. Der Bildung der Primärpartikeln, deren Größe im Bereich einiger Nanometer liegt, folgt die Phase des Aggregatwachstums.

Das Aggregatwachstum basiert auf der Kollision bereits vorhandener Primärpartikeln. In Folge des Aggregatwachstums entstehen irreguläre Partikel. Das Ausmaß der Asphärizität dieser Produktpartikel wird durch die lokalen thermodynamischen Bedingungen sowie durch die Präsenz interpartikulärer Kräfte determiniert. Die thermodynamischen Bedingungen bestimmen im wesentlichen den Umfang der Koaleszenz nach der Primärpartikelkollision. Die bedeutendsten Koaleszenzmechanismen sind der "viskose Fluß" und die "Festkörperdiffusion". Die Kinetik dieser Vorgänge ist einerseits stoffspezifisch und andererseits temperaturabhängig. Daher hat die Temperaturverteilung in der Flamme, die wesentlich durch die Gasgeschwindigkeiten bei der Verbrennung geprägt wird, einen entscheidenden Einfluß auf die Partikelmorphologie und damit auf die Produkteigenschaften.

Die bekannten Verfahren haben den Nachteil, daß die Gasgeschwindigkeit nicht beliebig eingestellt werden kann. So wird die Gasgeschwindigkeit sowohl durch die Reaktorgeometrie als auch durch die Austrittsgeschwindigkeit der Gase am Brennermund bestimmt. Aus Sicherheitsgründen darf bei vorgemischten Flammen die Austrittsgeschwindigkeit der Gase in den Verbrennungsraum nicht unterhalb der Flammengeschwindigkeit liegen. Häufig ist es sogar so, daß aus Sicherheitsgründen die Eintrittsgeschwindigkeit in den Brenner deutlich höher als die Flammengeschwindigkeit gewählt wird. Die Austrittsgeschwindigkeit darf andererseits aus physikalischen Gründen einen bestimmten Wert nicht überschreiten, da ansonsten die Flamme abhebt. Somit ist der Betriebsbereich hinsichtlich der Austrittsgeschwindigkeit der Gase sowohl nach oben als auch nach unten begrenzt.

Es besteht die Aufgabe, den Betriebsbereich bezüglich der Austrittsgeschwindigkeit der Gase in den Verbrennungsraum zu erweitern, um dadurch gezielt das Temperaturfeld und die Verweilzeit der Partikeln in der Flamme zu beeinflussen. Darüber hinaus soll es ermöglicht werden, homogene Reaktionsbedingungen bereitzustellen, um eine möglichst enge Verteilung von Partikeleigenschaften, wie zum Beispiel Primärpartikelgröße, Aggregatgröße, Anzahl der Primärpartikel pro Aggregat, spezifischer Oberfläche etc. zu erhalten.

Gegenstand der Erfindung ist ein Verfahren zur Synthese von Feststoffen, bevorzugt auf pyrogenen Wege, insbesondere durch Flammenhydrolyse, welches dadurch gekennzeichnet ist, daß man das Reaktionsgemisch vollständig oder in Teilen durch einen oder mehrere Formkörper, die in Strömungsrichtung durchgehende Kanäle aufweisen, in den Reaktionsraum einbringt wobei die Eintrittsgeschwindigkeit des Reaktionsgemisches gleich der Flammengeschwindigkeit ist. Das Reaktionsgemisch kann bevorzugt aus einer flüchtigen Verbindung eines Metalls und/oder Metalloids, einer Wasserstoff enthaltenden Verbindung und einen Oxidationsmittel bestehen. Insbesondere kann es aus Luft, Wasserstoff und flüchtigem Metall- und/oder Metalloidhalogenid bestehen.

Als flüchtige Metall- und/oder Metalloidverbindungen können Siliciumtetrachlorid, Trichlorsilan, Methyldichlorsilan, Trimethyldichlorsilan, Propyltrichlorsilan und/oder Hexamethyldisiloxan eingesetzt werden.

Durch die Formkörper kann man eine Homogenisierung der Strömung des Reaktionsgemisches in dem Reaktionsraum erreichen, in dem man das Reaktionsgemisch durch parallel angeordnete Kanäle in dem Formkörpern leitet.

Die Austrittsgeschwindigkeit der Strömung aus dem Formkörper kann 3 bis 15 m/s betragen.

Die Formkörper können aus keramischen, oxidhaltigen beziehungsweise metallischen Werkstoffen bestehen.

Die Formkörper können aus hitzebeständiger Keramik, wie zum Beispiel Cordierit, bestehen. Die Formkörper können vollständig oder in Teilen aus katalytisch wirksamen Materialien bestehen.

In einer weiteren Ausführungsform der Erfindung können die Formkörper aus hitze- und korrosionsbeständigem Stahl, wie zum Beispiel Inconel®, HC4 oder V4A, bestehen.

Die geometrische Anordnung der durchgehenden Kanäle in den Formkörpern kann in verschiedenen Ausgestaltungen durchgeführt sein.

So können die Kanäle aus durchgehenden Bohrungen von unterschiedlichen oder gleichen Durchmessern bestehen.

Sie können einen quadratischen, dreieckigen oder rechteckigen, zum Beispiel schlitzförmigen, Querschnitt aufweisen. Sie können wabenförmig in Form von zum Beispiel sechseckigen Kanälen angeordnet sein.

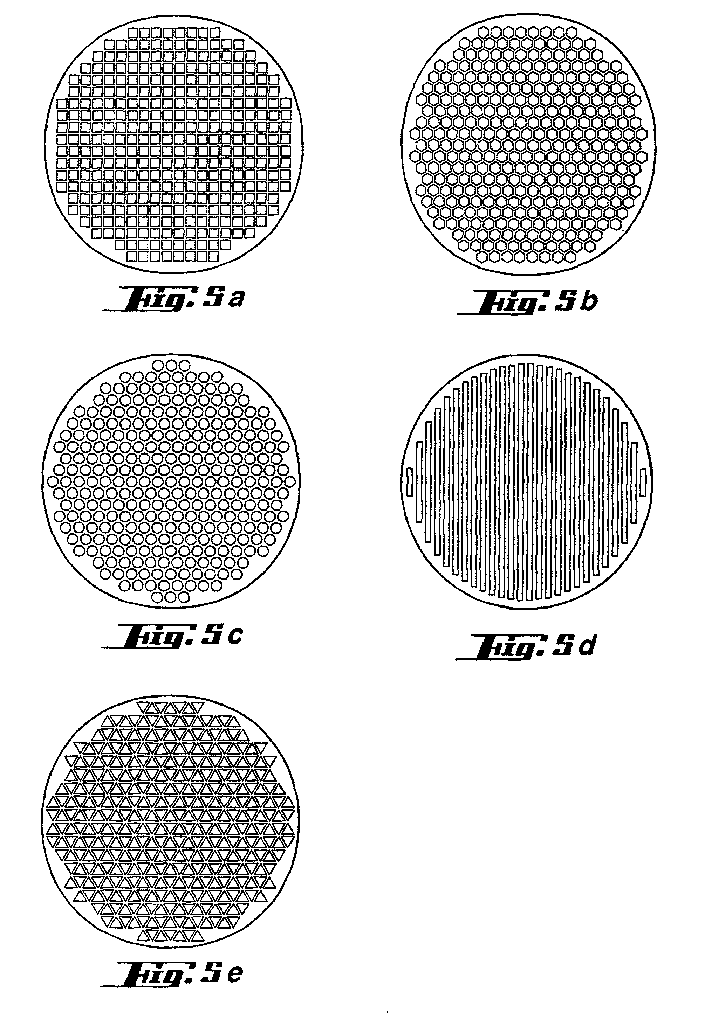

Die verschiedenen geometrischen Möglichkeiten sind in der Figur 5 a bis e schematisch dargestellt.

In der vorderen Zone des Reaktionsraumes kann man durch Verwendung von Formkörpern gezielt hohe Temperaturen bei einer extrem hohen Energiedichte einstellen.

Die erfindungsgemäßen pyrogen hergestellten Produkte können eine Primärpartikelgrößenverteilung, deren Standardabwichung $\sigma$ kleiner als 1,4 ist, aufweisen.

Die erfindungsgemäßen pyrogen hergestellten Produkte insbesondere Oxide von Metallen und/oder Metalloiden können eine Aggregatgrößenverteilung mit einer Standardabweichung kleiner als 1,5 aufweisen.

Die erfindungsgemäßen pyrogen hergestellten Produkte können eine spezifische Oberfläche im Bereich zwischen 10 und 500 $m^2/g$ aufweisen, wobei die Pulver einen niedrigen Aggregationsgrad aufweisen, so daß die Anzahl der Primärpartikel pro Aggregat gering ist. Vorzugsweise ist die Zahl der Primärpartitkel pro Aggregat nicht größer als 15, in besonderen Fällen nicht größer als 5.

Die erfindungsgemäßen pyrogen hergestellten Produkte können eine spezifische Oberfläche der Partikeln von kleiner als 150 $m^2/g$ aufweisen, wobei dann die Anzahl der Primärpartikel pro Aggregat kleiner als 3 ist.

Die erfindungsgemäßen pyrogen hergestellten Produkte können eine extrem niedrige Verdickungswirkung von $\leq 1000$ mPas aufweisen. Zusätzlich können Sie aber auch herkömmliche Verdickungswirkungen im Bereich von 2000 bis 4000 mPas erzielen. Die Bestimmung der Verdickungswirkung erfolgt gemäß DIN 53214 mittels einem Rotationsviskosimeter und Ludepal P6 (Polyesterharz).

Die erfindungsgemäß hergestellten Produkte können eine extrem hohe Silanolgruppedichte von $\geq 15 \frac{1}{nm^2}$ aufweisen.

Zusätzlich können die erfindungsgemäßen Produkte auch eine

Silanolgruppendichte von 2 bis 3 $\frac{1}{nm^2}$ aufweisen.

Die erfindungsgemäßen Produkte können einen $d_{50}$-Wert bei der Aggregatgrößenverteilung von $\leq$ 100 bevorzugt zwischen 50 und 70 nm aufweisen.

Die erfindungsgemäßen pyrogen hergestellten Produkte können Partikeln mit Oxiden folgender Elemente enthalten: Si, Ti, Al, Fe, Nb, Zr, Sn, Cr, Mn, Co, Ni, Cu, Ag, Nb, Bi, Ba, Ce, In und/oder Mo.

In einer bevorzugten Ausführungsform kann das Oxid ein Oxid aus der Gruppe der Oxide der Elemente Aluminium, Titan, Zirkon, Germanium, Silicium, Cer sowie Mischungen der Oxide oder Mischoxide, die durch gleichzeitige Umsetzung der entsprechenden verdampfbaren Ausgangsverbindungen hergestellt werden, sein.

Eine Vorrichtung zur Durchführung des erfindungsgemäßen Verfahrens kann aus einer Mischkammer, einem Reaktionsraum und einer Zuführungsleitung für das Reaktionsgemisch zu dem Brenner und einem Brenner bestehen, welche dadurch gekennzeichnet ist, daß in der Zuführungsleitung für das Reaktionsgemisch zu dem Brenner ein oder mehrere Formkörper mit durchgehenden Kanälen angeordnet sind.

Ferner kann die Vorrichtung an einem geschlossenen Brenner angeordnet sein.

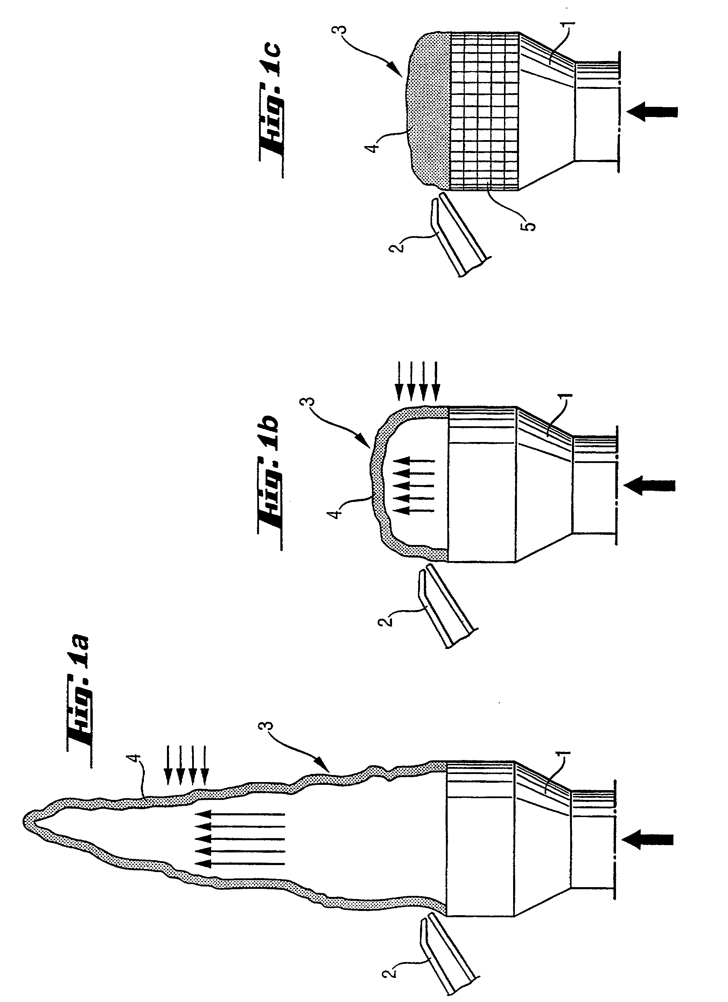

Die Einflüsse der Ausströmgeschwindigkeit auf die Flamme werden in den Figuren 1a bis c schematisch dargestellt. Das reaktionsfähige Gemisch wird dem Brenner 1 mit unterschiedlicher Geschwindigkeit zugeführt und durch einen Zündmechanismus 2 gezündet. Das sich ausbildende Flammenbild 3 resultiert aus der Überlagerung von Stoff- und Energietransportvorgängen. Das Verhältnis von Stofftransport (determiniert durch die Strömungsgeschwindigkeit) zu Wärmetransport (zur Bereitstellung der Aktivierungsenergie) bestimmt den Ort der Reaktion. Es kommt zur Ausbildung einer Hüll-Reaktionszone 4, in der die exothermen Verbrennungsreaktionen stattfinden. Bei hohen Ausströmgeschwindigkeiten erstreckt sich diese heiße Hüllschicht 4 auf einen großen Bereich und bedingt daher stark inhomogene Temperaturverteilungen und geringe mittlere Energiedichten (siehe Figur 1a). Bei der Reduzierung der Ausströmgeschwindigkeit verschiebt sich das Verhältnis von Wärme- zu Stofftransport, und die Aktivierungsenergie erreicht das Zentrum des Gasgemisches ortsaufgelöst eher. Dadurch verkürzt sich die Flamme (siehe Figur 1b). Wird die Ausströmgeschwindigkeit kleiner als die Flammengeschwindigkeit, so kommt es zu einem Flammenrückschlag in den Brenner 1. Dies kann durch den Einbau eines Formkörpers 5 unterbunden werden.

Durch die kanalförmigen Einbauten in dem Formkörper ist der freie Querschnitte des Brennerrohres reduziert. Dadurch erhöht sich die Gasgeschwindigkeit, sodaß die Anströmgeschwindigkeit des Gases höher als die Flammengeschwindigkeit ist.

Die laminare Flammengeschwindigkeit eines Gasgemisches bestehend aus $H_2$/Luft, beträgt etwa 5 m/sec.

Das erfindungsgemäße Verfahren weist den Vorteil auf, daß ein Zurückkriechen der Flammme verhindert wird.

Der Formkörper ist nicht anfällig für ein Zusetzen mit Produkten einer Verkieselung des Ausgangsgasgemisches. Diese Verkieselung kann dann entstehen, wenn in den Ausgangsstoffen auch Spuren von Wasser enthalten sind und so eine vorzeitige Hydrolyse des Siliciumtetrachlorides eintritt. Die Verkieselsung ist auch ein Grund dafür, daß keine bekannten Flammenrückschlagsperren eingesetzt werden können.

Bei einer geeigneten Wahl der Form und des Materials des Formkörpers 5 kann ein zusätzlicher Effekt genutzt werden: Der Formkörper 5 erwärmt sich durch Strahlung bei einer kurzen Flamme ausströmseitig soweit, daß die Reaktion bereits beim Passieren des Formkörpers 5 initiiert wird und sich eine Reaktionszone über den ganzen Querschnitt ausbildet (Figur 1c). Die resultierende Energiedichte ist höher und das Temperaturprofil quer zur Strömungsrichtung ist extrem homogen.

Folglich durchlaufen die nach der chemischen Reaktion gebildeten Cluster eine identische Temperatur-Verweilzeit-Historie, und daher wird eine extrem homogene Produktqualität erzielt. Bedingt durch die höhere Energiedichte können sehr einfach Partikel mit niedriger spezifischer Oberfläche (zum Beispiel < 100 m$^2$/g) erzeugt werden. Es ist jedoch genauso möglich, durch Reduktion der Precursorbeladung hochoberflächige Produkte (> 250 m$^2$/g) zu erzeugen, die ebenfalls eine extrem enge Verteilung von Primärpartikel- und Aggregatgröße aufweisen.

Es ist von Vorteil in der Gesamtbrennerkonstruktion eine Form zu finden, die eine homogene Anströmung des Formkörpers an seiner Oberfläche gewährleistet.

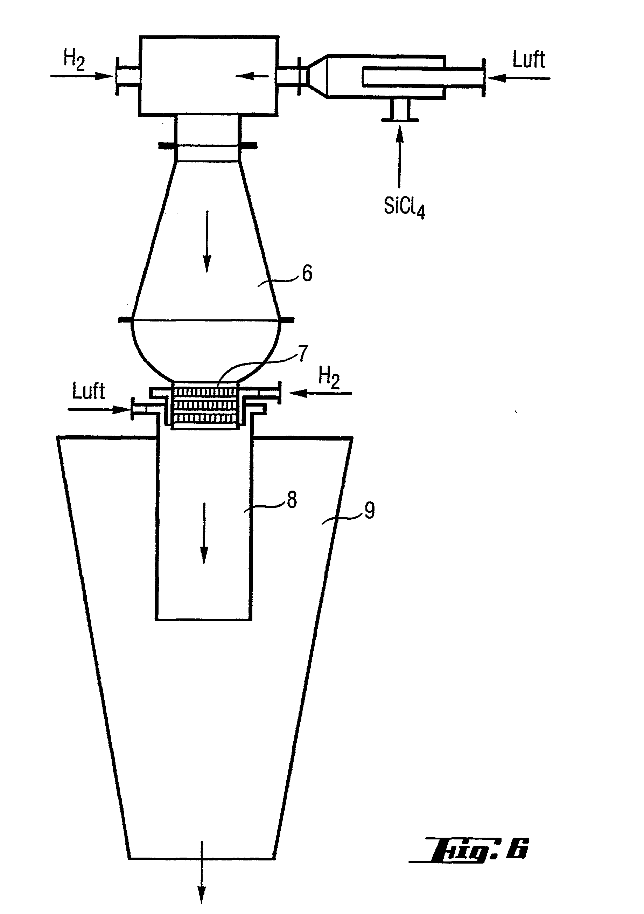

Verschiedene konstruktive Möglichkeiten sind in den Figuren 6, 7 und 8 schematisch dargestellt.

Gemäß Figur 6 wird das Ausgangsgasgemisch, bestehend aus Luft, Wasserstoff und flüchtiger Metall- und/oder Metalloid-Verbindung, wie zum Beispiel Siliciumtetrachlorid, von der Mischkammer in die windkanalähnliche Zuführleitung 6 eingeführt und durch den erfindungsgemäßen Formkörper 7 geführt. Um den Formkörper 7 sind ringförmige Spalteinlaßöffnungen für Luft und Wasserstoff angeordnet.

Der Formkörper ist ein Teil des Brenners, der als geschlossener Brenner ausgeführt ist. Das heißt: Die Luft, die neben dem Formkörper 7 eingeführt wird, wird nicht angesaugt, sondern mittels einer Dosiervorrichtung zudosiert. Zur Bildung von homogenen Strömungsbedingungen kann die Brennerflamme in das Rohr 8 geführt werden, bevor das entstandene Siliciumdioxid in den Reaktionsraum 9 weitergeleitet werden.

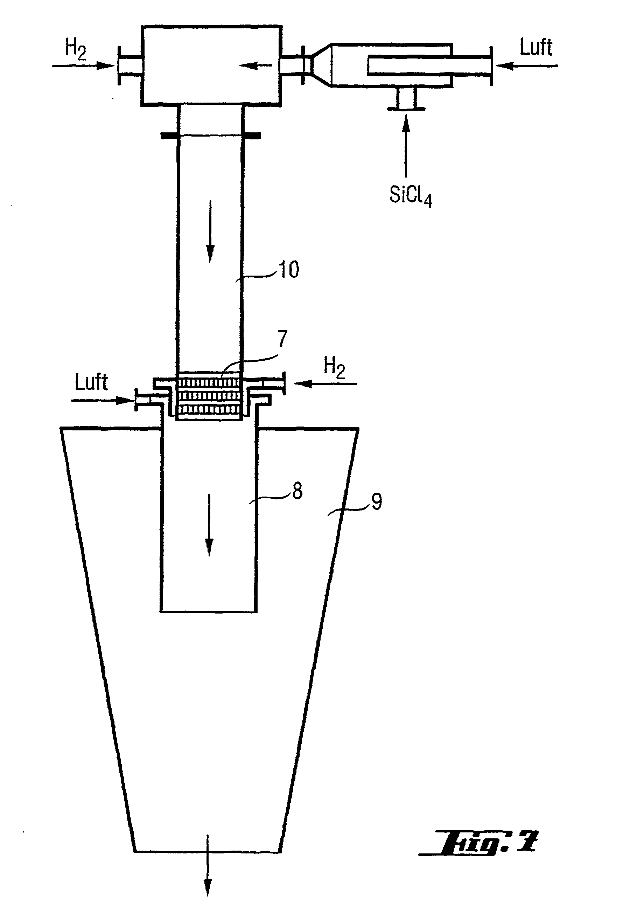

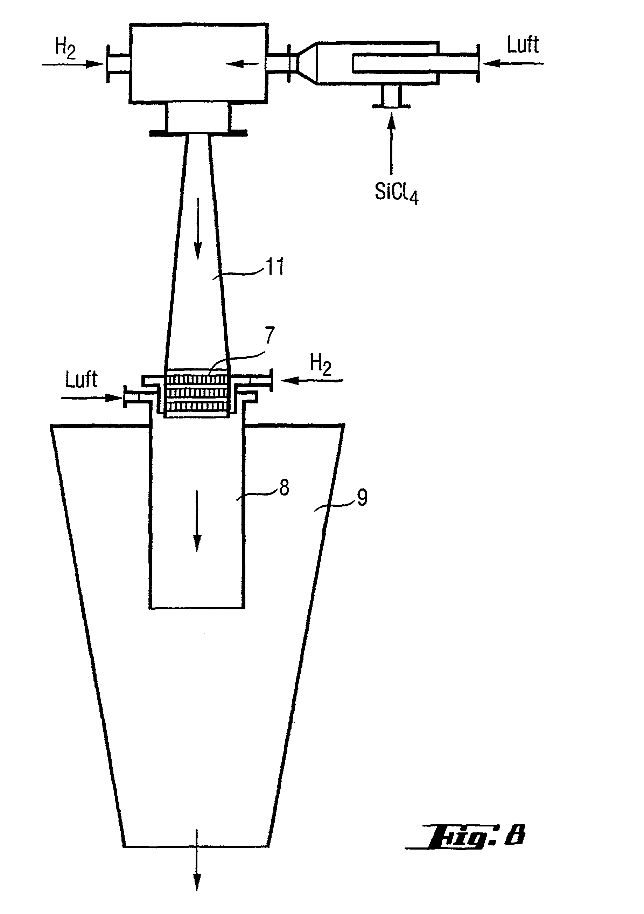

Gemäß Figur 7 kann die Gleichförmigkeit der homogenen Strömung dadurch erzielt werden, daß man das Gasgemisch anstatt durch die windkanalähnlichen Vorrichtung 6 durch die Zuführleitung 10 führt.

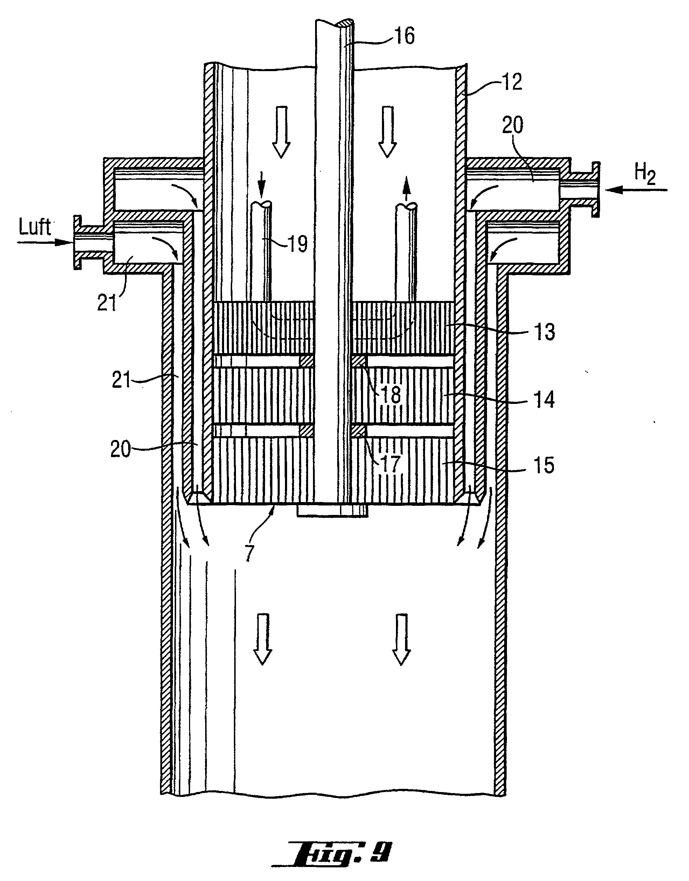

Gemäß Figur 8 kann die Gleichförmigkeit der homogenen Strömung dadurch erzielt werden, daß man das Gasgemisch anstatt durch die windkanalähnliche Zuführleiung 6 durch die konusförmige Zuführleitung 11 führt.

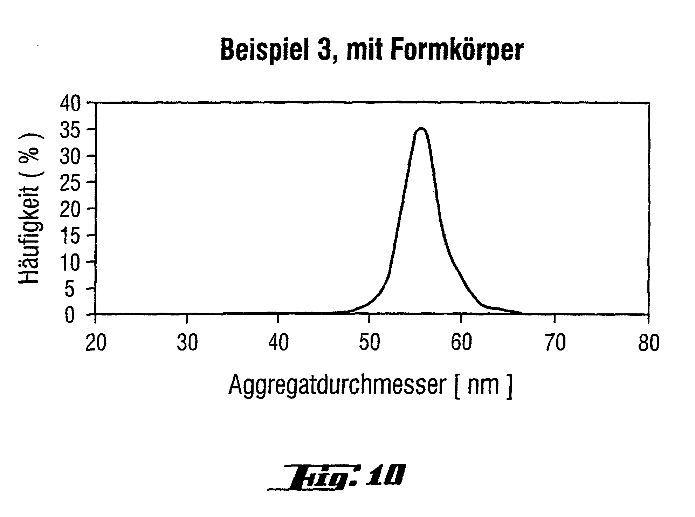

Figur 9 zeigt eine schematische Anordnung der Formkörper 7. In dem Rohr 12 sind die Formkörper 13, 14 und 15 angeordnet. Sie werden durch die Halterung 16 in dem Rohr 12 festgehalten. Zwischen den Formkörpern befinden sich die Distanzscheiben 17 und 18.

Die Formkörper 13, 14 und 15 können über die Zuleitung 19 mittels Kühlwasser gekühlt werden. Ringförmig um das Rohr 12 sind die Ringspalte 20 für die Zufuhr von Brenngas zum Beispiel Wasserstoff, und 21 für die Zufuhr von einem Oxidationsmittel, wie zum Beispiel Luft oder Sauerstoff, angeordnet.

Die erfindungsgemässen Produkte können bei dem CMP (Chemical Mechanical Polishing) als Poliermittel oder in minder viskosen Siliconkautschuken als Füllstoff eingesetzt werden. Weiterhin können die erfindungsgemäßen Produkte zur Herstellung von Glas verwendet werden.

Die erfindungsgemäßen Produkte können bei der Papierherstellung und bei der Papierbeschichtung eingesetzt werden.

Beispiel 1

Es wird pyrogenes SiO$_2$ mit einer spezifischen Oberfläche von 100 m$^2$/g aus SiCl$_4$ in einer Wasserstoffflamme bei einer Ausströmgeschwindigkeit von 5 m/s und dem Einsatz eines Formkörpers 5 und bei einer Ausströmgeschwindigkeit von 40 m/s ohne Formkörper 5 hergestellt.

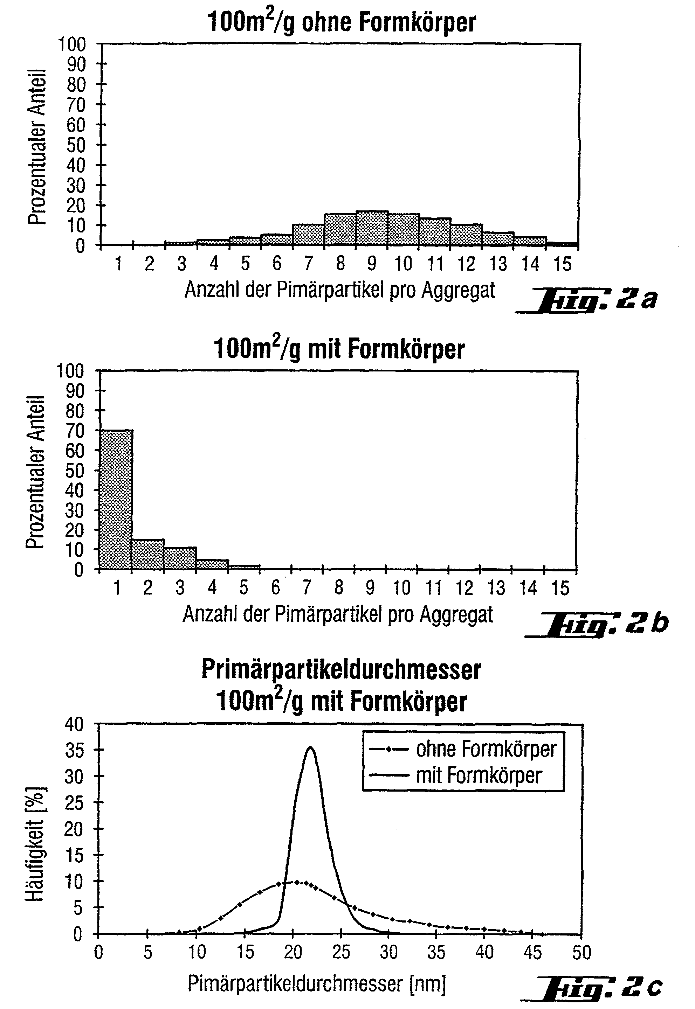

Ohne Einsatz eines Formkörpers werden Aggregate mit einer mittleren Anzahl von 9 Primärpartikel pro Aggregat gebildet (Figur 2a). Hierbei liegt der mittlere Primärpartikeldurchmesser bei 19 nm (Figur 2c). Durch die unterschiedlichen Temperatur-Verweilzeit-Historien, die die einzelnen Partikeln erfahren, ist sowohl die Verteilung der Primärpartikelanzahl wie auch der Primärpartikelgröße breit. So treten Aggregate mit 3 bis 15 Primärpartikel auf, wobei die Primärpartikel zwischen 5 und 45 nm groß sind. Die Standardabweichung der Primärpartikelgrößenverteilung beträgt in diesem Fall $\sigma_{log}$ = 1, 9.

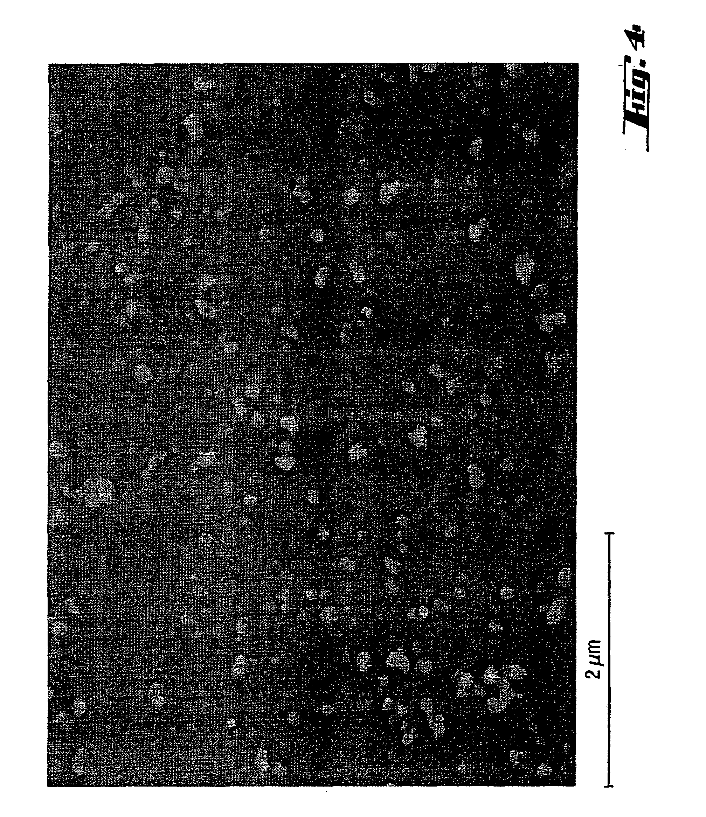

Bei dem Einsatz eines Formkörpers 5 verringert sich die Anzahl der Primärpartikel pro Aggregat. Etwa 70 % der Partikel liegen als Einzelpartikel vor. Nur ein geringer Teil ist aggregiert, wobei die maximale Anzahl an Primärpartikeln bei 5 liegt und die Verteilung damit enger ist als ohne Einsatz eines Formkörpers (Figur 2b). Dies wird nochmals durch die TEM-Aufnahme in Figur 4 deutlich. Gleiches gilt auch für die Verteilung der Primärpartikeldurchmesser, wobei der mittlere Durchmesser bei 21 nm mit einer Standardabweichung von nur $\sigma_{log}$ = 1,35 liegt (Figur 2c).

Beispiel 2

Es wird pyrogenes Siliciumdioxid mit einer resultierenden spezifischen Oberfläche von 300 qm/g aus SiCl$_4$ in einer Wasserstoffflamme bei einer Ausströmgeschwindigkeit von 5 m/s und dem Einsatz eines Formkörpers und bei einer Ausströmgeschwindigkeit von 40 m/s ohne Formkörper hergestellt.

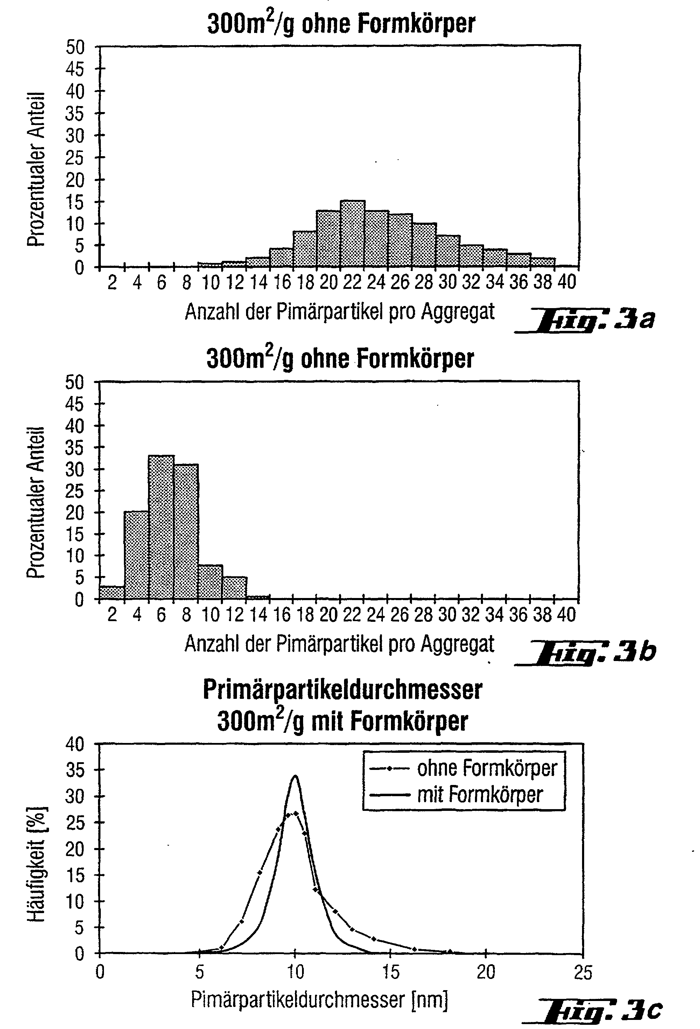

Bei der Bildung von Siliciumdioxid mit höherer spezifischer Oberfläche sind ähnliche Tendenzen zu erkennen wie im Beispiel 1 bei niedriger Oberfläche. Die mittlere Anzahl der Primärpartikel verringert sich von 22 auf 7 und der Bereich verengt sich von 10 bis 40 auf 2 bis 14 Primärpartikel pro Aggregat (Figur 3a und b). Bei einem nahezu gleichen mittleren Durchmesser von 10 nm ist die Primärpartikelgrößenverteilung unter Einsatz eines Formkörpers enger ($\sigma_{log}$ = 1,3 gegenüber $\sigma_{log}$ = 1,6, Figur 3c).

Beide Beispiele belegen, daß auch die Aggregatgrößenverteilungen unter Einsatz eines Formkörpers enger werden, da die Aggregatgröße durch die Größe der Primärpartikel und insbesondere durch die Anzahl der Primärpartikel pro Aggregat bestimmt wird.

Beispiel 3

Es wird pyrogenes $SiO_2$ aus $SiCl_4$ in einer Wasserstoffflamme bei einer Ausströmgeschwindigkeit von 5 m/s und dem Einsatz eines Formkörpers'5 hergestellt. Analog zu Beispiel 1 und Beispiel 2 wird auch in diesem Beispiel eine enge Primärpartikelgrößenverteilung einer Dispersion des pyrogenen $SiO_2$ in Wasser bei einem pH-Wert von 8 erzielt. Die Probe wird 5 min im Ultraschallbad dispergiert und mit einem Laserbeugungsspektrometer mit PIDS Submiktomerweiterung (Typ LS230) vermessen. Der mittlere Aggregatdurchmesser beträgt in diesem Fall 56 nm.

## Patentansprüche

1. Verfahren zur Synthese von Feststoffen, **dadurch gekennzeichnet, daß** man das Reaktionsgemisch vollständig oder in Teilen durch einen oder mehrere Formkörper, die in Strömungsrichtung durchgehende Kanäle aufweisen, in den Reaktionsraum einbringt, wobei die Eintrittsgeschwindigkeit des Reaktionsgemisches gleich der Flammengeschwindigkeit ist.

2. Verfahren zur Synthese von Feststoffen, gemäß Anspruch 1, **dadurch gekennzeichnet, daß** man durch die Formkörper eine Homogenisierung der Strömung des Reaktionsgemisches in dem Reaktionsraum dadurch erreicht, daß man das Reaktionsgemisch durch parallel angeordnete Kanäle leitet.

3. Verfahren zur Synthese von Feststoffen, gemäß Anspruch 1, **dadurch gekennzeichnet, daß** die Formkörper vollständig oder in Teilen aus katalytisch aktivem Material bestehen.

4. Verfahren zur Synthese von Feststoffen, gemäß Anspruch 1 **dadurch gekennzeichnet, daß** man in der vorderen Zone des Reaktionsraumes durch Verwendung von Formkörpern gezielt hohe Temperaturen bei einer extrem hohen Energiedichte einstellt.

5. Pyrogen hergestellte Produkte, **dadurch gekennzeichnet, daß** die Primärpartikelgrößenverteilung eine Standardabweichung σ kleiner als 1,4 aufweist.

6. Pyrogen hergestellte Produkte gemäß Anspruch 5, **dadurch gekennzeichnet, daß** die Aggregatgrößenverteilung eine Standardabwichung kleiner als 1,5 aufweist.

7. Pyrogen hergestellte Produkte gemäß Anspruch 5, **dadurch gekennzeichnet, daß** der $d_{50}$-Wert bei der Aggregatgrößenverteilung ≤ 100 nm ist.

8. Pyrogen hergestellte Produkte gemäß Anspruch 5, **dadurch gekennzeichnet, daß** der $d_{50}$-Wert bei der Aggregatgrößenverteilung zwischen 50 und 70 nm liegt.

9. Pyrogen hergestellte Produkte gemäß Anspruch 5, **dadurch gekennzeichnet, daß** sie eine spezifische Oberfläche im Bereich zwischen 10 und 500 $m^2/g$ aufweisen, wobei die Produkte einen niedrigen Aggregationsgrad aufweisen, so daß die Anzahl der Primärpartikel pro Aggregat gering ist.

10. Pyrogen hergestellte Produkte gemäß Anspruch 5, **dadurch gekennzeichnet daß** die spezifische Oberfläche der 15 Partikeln kleiner als 150 $m^2/g$ ist, wobei die Anzahl der Primärpartikel pro Aggregat kleiner als 3 ist.

11. Pyrogen hergestellte Produkte gemäß Anspruch 5, **dadurch gekennzeichnet, daß** die Partikel Oxide folgender Elemente enthalten: Si, Ti, Al, Fe, Nb, Zr, Sn, Cr, Mn, Co, Ni, Cu, Ag, Nb, Bi, Ba, Ce, In und/oder Mo.

12. Verwendung der pyrogen hergestellten Produkte gemäß Anspruch 5 zur Herstellung einer Dispersion bei dem 30 Chemical Mechanical Polishing (CMP).

13. Verwendung der pyrogen hergestellten Produkte gemäß Anspruch 5 zur Herstellung von Glas.

14. Verwendung der pyrogen hergestellten Produkte gemäß Anspruch 5 als Füllstoff in Silikonkautschuk.

## Claims

1. Process for the synthesis of solids, **characterized in that** the reaction mixture is introduced into the reaction chamber completely or partly through one or more shaped bodies which have continuous channels in the direction of flow, wherein the entry speed of the reaction mixture is the same as the flame speed.

2. Process for the synthesis of solids, according to claim 1, **characterized in that** as a result of the shaped bodies, homogenization of the flow of the reaction mixture in the reaction chamber can be achieved by passing the reaction mixture through channels arranged in parallel.

3. Process for the synthesis of solids, according to claim 1, **characterized in that** the shaped body is made completely or partly of catalytically active material.

4. Process for the synthesis of solids, according to claim 1, **characterized in that** by using shaped bodies, high temperatures are established at an extremely high energy density in the front zone of the reaction chamber.

5. Pyrogenically prepared products, **characterized in that** the primary particle size distribution has a standard deviation $\sigma$ of less than 1.4.

6. Pyrogenically prepared products according to claim 5, **characterized in that** the aggregate size distribution has a standard deviation of less than 1.5.

7. Pyrogenically prepared products according to claim 5, **characterized in that** the $d_{50}$ value at the aggregate size distribution is $\leq$ 100 nm.

8. Pyrogenically prepared products according to claim 5, **characterized in that** the $d_{50}$ value at the aggregate size distribution is between 50 and 70 nm.

9. Pyrogenically prepared products according to claim 5, **characterized in that** they have a specific surface area in the range between 10 and 500 $m^2/g$, the products having a low degree of aggregation, so that the number of primary particles per aggregate is low.

10. Pyrogenically prepared products according to claim 5, **characterized in that** the specific surface area of the particles is less than 150 $m^2/g$, the number of primary particles per aggregate being less than 3.

11. Pyrogenically prepared products according to claim 5, **characterized in that** the particles comprise oxides of the following elements: Si, Ti, Al, Fe, Nb, Zr, Sn, Cr, Mn, Co, Ni, Cu, Ag, Nb, Bi, Ba, Ce, In and/or Mo.

12. Use of the pyrogenically prepared products according to claim 5 for the preparation of a dispersion in chemical mechanical polishing (CMP).

13. Use of the pyrogenically prepared products according to claim 5 for the production of glass.

14. Use of the pyrogenically prepared products according to claim 5 as a filler in silicone rubber.

**Revendications**

1. Procédé de synthèse de matériau solide, **caractérisé en ce qu'** on introduit dans la chambre à réaction le mélange réactionnel de façon complète ou par parties à travers une ou plusieurs pièces moulées, qui présente dans la direction d'écoulement des canaux de part en part, où la vitesse d'introduction du mélange réactionnel est identique à la vitesse de la flamme.

2. Procédé de synthèse de matière solide selon la revendication 1, **caractérisé en ce que** grâce aux pièces moulées on obtient une homogénéisation de l'écoulement du mélange réactionnel dans la chambre à réaction de manière à conduire le mélange réactionnel par des canaux disposés parallèlement.

3. Procédé de synthèse de matières solides selon la revendication 1, **caractérisé en ce que** les pièces moulées se composent entièrement ou en partie d'un matériau catalytiquement actif.

4. Procédé de synthèse de matières solides selon la revendication 1, **caractérisé en ce que** dans la zone antérieure de la chambre à réaction, en utilisant des pièces moulées, on établit des températures élevées ciblées avec une densité d'énergie extrêmement élevée.

5. Produits préparés de façon pyrogène, **caractérisés en ce que** la répartition de la taille des particules primaires présente un écart-type $\sigma$ inférieur à 1,4.

6. Produits préparés de façon pyrogène selon la revendication 5, **caractérisés en ce que** la répartition de taille des agrégats présente un écart-type inférieur à 1,5.

7. Produits préparés de façon pyrogène selon la revendication 5, **caractérisés en ce que** la valeur de $d_{50}$ dans la répartition de la taille des agrégats est inférieure à 100 nm.

8. Produits préparés de façon pyrogène selon la revendication 5, **caractérisés en ce que** la valeur de $d_{50}$ dans la répartition de taille des agrégats se situe entre 50 et 70 nm.

9. Produits préparés de façon pyrogène selon la revendication 5,
**caractérisés en ce qu'**
ils présentent une surface spécifique comprise entre 10 et 500 m$^2$/g, les produits présentant un faible degré d'agrégation, si bien que le nombre des particules primaires par agrégat est faible.

10. Produits préparés de façon pyrogène selon la revendication 5,
**caractérisés en ce que**
la surface spécifique des particules est inférieure à 150 m$^2$/g, le nombre des particules primaires par agrégat étant inférieur à 3.

11. Produits préparés de façon pyrogène selon la revendication 5,
**caractérisés en ce que**
les particules contiennent des liquides des éléments suivants : Si, Ti, Al, Fe, Nb, Zr, Sn, Cr, Mn, Co, Ni, Cu, Ag, Nb, Bi, Ba, Ce, In et/ou Mo.

12. Utilisation des produits préparés de façon pyrogène selon la revendication 5,
pour la production d'une dispersion dans le procédé de polissage chimio-mécanique (CMP - Chemical Mecanical Polishing).

13. Utilisation des produits préparés de façon pyrogène selon la revendication 6 pour la fabrication du verre.

14. Utilisation des produits préparés de façon pyrogène selon la revendication 5, comme charges dans le caoutchouc siliconé.

**Fig: 1a**

4

3

2

1

**Fig: 1b**

4 3

2

1

**Fig: 1c**

4 3

2

5

1

EP 1 004 545 B1

## 100m²/g ohne Formkörper

*Fig: 2 a*

## 100m²/g mit Formkörper

*Fig: 2 b*

## Primärpartikeldurchmesser
## 100m²/g mit Formkörper

*Fig: 2 c*

## 300m²/g ohne Formkörper

*Fig. 3a*

## 300m²/g ohne Formkörper

*Fig. 3b*

## Primärpartikeldurchmesser
## 300m²/g mit Formkörper

*Fig. 3c*

2 µm

Fig. 4

Fig. 5 a

Fig. 5 b

Fig. 5 c

Fig. 5 d

Fig. 5 e

**Fig. 6**

Fig. 1

H₂

Luft

SiCl₄

11

7

Luft

H₂

8

9

*Fig. 8*

16 12 20 H₂ Luft 21 19 13 21 18 14 20 17 15 7

*Fig. 9*

## Beispiel 3, mit Formkörper

**Fig. 10**